# EUROPÄISCHE PATENTSCHRIFT

(11) **EP 2 272 778 B1**
(45) Veröffentlichungstag und Bekanntmachung des Hinweises auf die Patenterteilung: **12.09.2012**
(21) Anmeldenummer: 09164464.1
(22) Anmeldetag: 02.07.2009
(51) Int. Cl.: B65G 1/04

(54) **Lagereinrichtung für Stückgüter**
Storage device for piece goods
Dispositif de stockage pour marchandises au détail

(43) Veröffentlichungstag der Anmeldung: 12.01.2011
(73) Patentinhaber: Rowa Automatisierungssysteme GmbH, 53539 Kelberg (DE)
(72) Erfinder: Brokonier, Stephan, 54570 Neroth (DE)
(74) Vertreter: Zenz

(56) Entgegenhaltungen:
- EP-A- 0 847 943
- EP-A- 1 795 464
- AT-B- 410 934
- DE-U1- 20 011 661
- FR-A1- 2 351 032
- JP-A- 52 035 050

## Beschreibung

Die Erfindung betrifft eine Lagereinrichtung für Stückgüter. Insbesondere betrifft die Erfindung eine Lagereinrichtung für Stückgüter mit wenigstens einem Regal mit mehreren übereinander angeordneten Regelfächern, welche horizontale Lagerflächen aufweisen. Ein Bediengerät ist stirnseitig vor dem Regal (an dessen Vorderseite) in vertikaler und horizontaler Richtung verfahrbar angeordnet. Das Bediengerät weist einen Auflagetisch zur Aufnahme wenigstens eines Stückgutes auf, wobei der Auflagetisch derart vor einer der Lagerflächen positionierbar ist, dass Stückgüter von dem Auflagetisch des Bediengerätes horizontal auf die Lagerfläche oder von der Lagerfläche auf den Auflagetisch geschoben bzw. gezogen werden können. Vor den dem Bediengerät zugewandten Stirnseiten der Lagerflächen ist eine vertikal verfahrbare Abdeckung angeordnet, welche einen Teil der Regalfächer freigeben kann.

Eine Lagereinrichtung gemäß der eingangs genannten Art ist beispielsweise aus der DE 200 11 661 U1 bekannt. Dort werden die Lagerflächen eines Regallagers durch eine Abdeckung in Gestalt einer Rolllade abgedeckt, wobei die Lagerräume als Kühlräume ausgebildet sind und die Rolllade als thermische Isolierung der Kühlräume dient .

Ferner ist aus der JP 52 035050 A, entsprechend dem oberbegriff von anspruch 1, ein System zur Verlegung von Gegenständen bekannt, bei dem Türen einer jeden Etage in Abhängigkeit der Bewegung eines Aufzugs geöffnet oder geschlossen werden.

Derartige Regallager dienen der Lagerung beliebiger Stückgüter, insbesondere werden sie in Apotheken zur Lagerung von Medikamenten eingesetzt. Die Elemente derartiger Regallager können mit einem programmierbaren Steuersystem gekoppelt sein, welches eine chaotische Lagerung von Stückgütern auf den Lagerflächen erlaubt. Mittels Bediengerät wird je nach Abruf oder Bestückungswunsch eine bestimmte Lagerfläche angesteuert bzw. angefahren und das gewählte Stückgut aus- oder eingelagert. Das Ein- oder Auslagern erfolgt derart, dass das Stückgut zwischen Lagereinrichtungsablage und Auflagetisch des Bediengerätes bewegt wird, wobei es üblicherweise mit einer Klemmvorrichtung, Saugvorrichtung oder sonstige Haltevorrichtung zwischen Auflagetisch und Lagerfläche geschoben oder gezogen wird.

Da in Apotheken sowohl zu kühlende Medikamente als auch solche Medikamente gelagert werden, die bei üblichen Raumbedingungen lagerungsfähig sind, braucht nicht jede Regaleinrichtung oder jeder Lagerboden mit einer Abdeckung versehen zu werden, um eine thermische Isolation der zu kühlenden Bereiche bereitzustellen. Wird bei den bekannten Systemen festgestellt, dass ein Stückgut aus einem abgedeckten Bereich des Regallagers auszulagern oder dort einzulagern ist, steuert das Steuersystem der Einrichtung sowohl das Bediengerät als auch die Abdeckung an, um dem Bediengerät einen freien Zugriff auf die Lagerfläche zu geben.

Bei derartigen Lagern, wie sie beispielsweise aus dem genannten Stand der Technik bekannt sind, besteht das Problem, dass die Abdeckung selbst, insbesondere wenn sie als thermische Isolation ausgebildet ist, eine gewisse Dicke aufweist. Wird die Abdeckung zeitweise entfernt, z.B. durch Hochfahren einer Abdeckungsrolllade, so entsteht ein wenigstens der Dicke der Abdeckung entsprechender Zwischenraum zwischen den Lagerflächen und dem Aufnahmetisch des Bediengerätes. Dieser Abstand wird überbrückt, indem das Bediengerät mit seinem Auflagetisch horizontal in Richtung der Lagerfläche verfahrbar ausgebildet ist. In diesem Fall muss also das Bediengerät bei Regalen mit Abdeckung einen anderen Bewegungsablauf ausführen als bei solchen Regalfächern, welche nicht mit einer Abdeckung versehen sind, da deren Regalböden üblicherweise bis an das Bediengerät heranreichen bzw. eine so kleinen Abstand bilden, dass dieser für die Bestückung und Entnahme unproblematisch ist.

Der unterschiedliche Bewegungsablauf für das Bediengerät macht die Anlage komplexer, Fehleranfälliger und ist außerdem zeitraubend bei einer Vielzahl von Ein- und Auslagerungsvorgängen.

Aufgabe der Erfindung ist es daher, ein optimiertes Regallager bereitzustellen, bei welchem eine Abdeckung der Lagerbereiche vorgesehen sein kann.

Diese Aufgabe wird gelöst durch eine Lagereinrichtung mit den Merkmalen des Patentanspruchs 1 sowie ein Verfahren mit den Merkmalen des Anspruchs 8.

Bei der Lagereinrichtung gemäß der Erfindung weist die vertikal verfahrbare Abdeckung der Lagereinrichtung oder wenigstens ein Segment dieser Abdeckung einen oberen Rand bzw. eine obere Stirnseite auf, die eine Gleitfläche hat. Die Gleitfläche kann horizontal ausgerichtet sein oder als in der Neigung verstellbare Fläche ausgebildet sein. Im letztgenannten Fall kann die Gleitfläche mit einem Antrieb gekoppelt sein, um die Gleitfläche um eine Achse, welche parallel zu der vorderen Kante der Regale verläuft, zu schwenken. Alternativ kann die Gleitfläche auch mit einer Wölbung oder Auskehlung versehen sein, um ein Abgleiten der Stückgüter über die Gleitfläche zu erleichtern. Die Abdeckung bzw. das Segment ist derart am Regal positionierbar, dass die Gleitfläche vor einer für den Zugriff durch das Bediengerät ausgewählten Lagerfläche positionierbar ist. Die Gleitfläche der Abdeckung bildet dann eine Überbrückung eines Freiraumes zwischen der dem Bediengerät zugewandten Stirnseite der ausgewählten Lagerfläche und dem Auflagetisch des Bediengerätes. Die Abdeckung ist aus mehreren vertikal übereinander angeordneten und aufeinander ruhende Segmenten gebildet, wobei wenigstens zwei der Segmente vertikal gegeneinander verfahrbar sind, und wenigstens einige der Segmente am oberen Rand jeweils eine Gleitfläche aufweisen.

Ein Stückgut kann durch Ausnutzung der Gleitfläche von dem Auflagetisch auf die Lagerfläche verschoben werden oder in entgegen gesetzter Richtung heruntergezogen oder ausgestoßen werden, ohne dass es durch einen freien Raum zwischen Auflagetisch und Lagerfläche zu einem Verkannten oder Verhaken des Stückgutes kommen kann. Das Bediengerät braucht keine Bewegung des Auflagetisches gegen die Lagerflächen zu machen.

Die Erfindung impliziert, dass die Abdeckung bzw. das Segment der Abdeckung, von dem Regalfach bzw. der Lagerfläche auf die ein Zugriff erfolgen soll aus gesehen, nach unten verfahren wird, da nur dann die Gleitfläche vor der Lagerflächenkante zu positionieren ist, denn die Gleitfläche ist am oberen Rand bzw. einer oberen Stirnseite des Segments der Abdeckung angeordnet.

Im Gegensatz zu der Rolllade, wie sie aus der DE 200 11 661 U1 bekannt ist, wird in diesem Fall die Abdeckung nach unten verfahren. Dazu kann die gesamte Abdeckung oder nur ein Gesamtsegment der Abdeckung verfahren werden, falls die Abdeckung aus mehreren separaten Segmenten gebildet ist. Im letztgenannten Fall wird erreicht, dass nur in einem Ausschnitt des Regals die Abdeckung entfernt wird, in den übrigen Bereichen die Abdeckung jedoch vor den Lagerräumen bleibt und beispielsweise eine durch die Abdeckung bewirkte Isolierung dort erhalten bleibt.

Die Gleitfläche kann in beliebiger Art ausgebildet sein, insbesondere kann sie als horizontale ebene Gleitfläche ausgebildet sein oder als gewölbte Gleitfläche aus einem beliebigen Material. Das Material kann identisch mit dem der Abdeckung sein oder die Gleitfläche ist aus einem anderen Material aufgebracht. Ist die Gleitfläche mit einem Antrieb zum Verschwenken gekoppelt, so kann die Gleitfläche z.B. derart angesteuert werden, dass sie leicht ansteigend in Transportrichtung der Stückgüter angestellt wird. Dabei ist die Kante der Stückguteintritts (bei Auslagerung die Regalseite, bei Einlagerung die Seite des Auflagetisches des Bediengerätes) wiederum unterhalb der Annahme-Übergabefläche des Stückgutes angeordnet, die abgewandte Kante der Gleitfläche ist dann jedoch oberhalb der Ziel-Übergabefläche angeordnet. So kann z.B. das Bediengerät mit der Lagerfläche auf identischer ausgerichtet werden, lediglich die Gleitfläche wird in geeigneter Weise angestellt, um ein Verkanten sicher zu verhindern.

Zum vertikalen Verfahren der Abdeckung ist eine Ansteuerung eines Abdeckungsantriebes erforderlich, welcher eine genaue Positionierung der Abdeckung erlaubt. Der Antrieb kann an mehreren Segmenten separat ausgebildet oder als zentraler Antrieb für alle Abdeckungsteile ausgebildet sein. Die Ansteuerung der Abdeckung hat mit geringer Toleranz zu erfolgen, so dass die gewünschten Positionen gezielt anzufahren sind. Es muss bei einer Entnahme eines Stückgutes nämlich vermieden werden, dass die Abdeckung in vertikaler Richtung oberhalb der Lagerfläche übersteht, so dass sie ein zu entnehmendes Stückgut blockieren würde. Andererseits darf auch bei einer Bestückung des Regallagers die Abdeckung nicht oberhalb der Ebene der Auflagefläche des Bediengerätes angeordnet sein, da sie dann wiederum den Transport des Stückgutes in das Lager blockieren würde.

Die vertikal verfahrbare Abdeckung kann dazu mit einer Positioniersteuerung gekoppelt sein. Alternativ können Rastvorrichtungen für die Abdeckung vorgesehen sein, welche eine ordnungsgemäße Einstellung der Abdeckung sicherstellen, indem sie Sollstellungen der Abdeckungen als Lager- oder Raststellungen vorgeben, welche gezielt angefahren werden. Schließlich können auch optische oder mechanische Sensoren zur Kontrolle der Stellung der Abdeckung vorgesehen sein. Es ist auch möglich, die Abdeckung mit der Mimik zum Verfahren des Bediengerätes zu koppeln, wobei dann die Verstellung der Abdeckung durch einen entsprechenden Eingriff dieser Bewegungsmimik des Bediengerätes erfolgen würde.

Die horizontale Tiefe der Gleitfläche in der Richtung zwischen Auflagetisch des Bediengerätes und Lagerfläche des Regallagers ist üblicherweise derart gewählt, dass das Bediengerät ohne horizontale Verstellung auf die Regallagerflächen zugreifen kann, wobei die Gleitfläche als Überbrückung dient. Dazu endet die Gleitfläche dort, wo im Bereich des Regallagers, der ohne Abdeckung ausgebildet ist, die Lagerflächen des Regallagers enden.

Wesentlich bei der Erfindung ist es demnach, die Abdeckung selbst als funktionalen Bestandteil des Ein- oder Auslagerungsvorgangs zu verwenden. Die Abdeckung überbrückt den Abstand zwischen Lagerböden und Bediengerät. Auf diese Weise können Regallager mit Abdeckung und Regallager ohne Abdeckung vorteilhaft kombiniert werden, wobei bei den Regallagern ohne Abdeckung die Lagerböden bis an den Bedientisch heranreichen. Eine Bedienung sämtlicher Regallager, ob mit oder ohne Abdeckung ist dann durch ein einziges Bediengerät in rascher Weise möglich, da das Bediengerät keine unterschiedlichen Abstände des Auflagetisches von den Regallagern zu überbrücken hat. Bei Regalböden ohne Abdeckungselemente ist nur ein unwesentlicher Abstand zwischen Lagerboden und Auflagetisch vorhanden, bei solchen Regalen mit Abdeckung überbrückt die Abdeckung selbst erfindungsgemäß den Zwischenraum zwischen Auflagetisch und Lagerboden. Eine einzige konstante Distanz des Bediengerätes von allen Lagerregalen, egal ob mit Abdeckung oder ohne, erlaubt die Bestückung und Entnahme von Stückgütern ohne zusätzliche Bewegungen des Bediengerätes entlang einer dritten Achse.

Vorzugsweise ist die Lagereinrichtung derart ausgebildet, dass die Abdeckung bzw. das Segment der Abdeckung derart ansteuerbar und verfahrbar ist, dass die Gleitfläche vor einer für den Zugriff durch das Bediengerät ausgewählten Lagerfläche so positionierbar ist, dass die Gleitfläche mit der Lagerfläche horizontal fluchtet oder 0,5-5 mm unterhalb der Ebene der Lagerfläche angeordnet ist, um eine Entnahme eines Stückgutes von der Lagerfläche zu ermöglichen.

Andererseits ist die Gleitfläche derart verfahrbar, dass die Gleitfläche mit der Lagerfläche horizontal fluchtet oder 0,5-5 mm oberhalb der Ebene der Lagerfläche angeordnet ist, um eine Bestückung der Lagerfläche mit einem Stückgut zu ermöglichen.

Es wird entsprechend die Gleitfläche in einer horizontalen Ebene positioniert, die vertikal zwischen der Ebene der Lagerfläche im Regal und der Ebene des Auflagetisches des Bediengerätes angeordnet ist. Dies erfolgt derart, dass je nach Förderrichtung des Stückgutes von dem Auflagetisch in das Regallager einerseits oder von dem Regallager auf den Auflagetisch andererseits jeweils eine Art absteigende Stufenfolge in Transportrichtung für das Stückgut gebildet wird. Das Stückgut kann auf diese Weise nicht verkannten oder verklemmen, da es in jeder Richtung einen Weg über eine absteigende Treppenanordnung nimmt.

Je nach Toleranz des Antriebs und Größe der einzulagernden Stückgüter kann eine unterschiedliche Vorgabe des vertikalen Versatzes gemacht werden. Dieser vertikale Versatz kann für alle Lagerebenen identisch sein, oder in Abhängigkeit von der Lagerebene und den darin angeordneten Stückgütern vorgewählt werden.

Es kann sich beispielsweise als sinnvoll erweisen, einen vertikalen Versatz zwischen Lagerfläche und Gleitfläche von 1 mm vorzugeben, wenn eine Ansteuertoleranz von maximal 0,5 mm zu erwarten ist. Ebenso kann dann eine Ansteuerung des Bediengerätes auf eine Ebene 2 mm vertikal versetzt gegenüber der Lagerfläche vorgegeben werden, wenn dessen vertikale Toleranz ebenfalls 0,5 mm beträgt. Auf diese Weise ist in jedem Falle ein verkeilungsfreies Bestücken oder Entnehmen gewährleistet.

Die Ausbildung der Abdeckung aus mehreren vertikal übereinander angeordneten separaten Segmenten hat den Vorteil, dass das Regallager abschnittsweise freigegeben werden kann, wobei nur einige der Segmente vertikal verschoben werden. Beispielsweise kann die Segmenthöhe etwa der Höhe der Regalfläche entsprechen, so dass lediglich das Regalfach freigegeben wird, auf das auch der Zugriff erfolgen soll. Alternativ kann ein Mehrfaches der Regalfachhöhen mit jeweils einem Segment abgedeckt werden, oder es kann auch die gesamte Abdeckung aus lediglich zwei Segmenten gebildet sein. Die Segmente selbst können als kompakte oder starre Segmente gebildet sein oder selbst wiederum als mehrteilige oder flexible Segmente ausgebildet sein. Mehrteilige Segmente können aus Untersegmenten bestehen, wobei die Untersegmente miteinander verbunden sind, um z.B. eine Rolllade zu bilden.

In einer Weiterbildung der Erfindung sind die Segmente in seitlichen Führungen als Stapel angeordnet, so dass die Segmente jeweils aufeinander ruhen und durch vertikales Anheben oder Absenken eines der Segmente die aufliegenden Segmente mitbewegt werden.

Ein derartiger Segmentstapel ermöglicht das gezielte Anheben eines der Segmente zusammen mit den aufliegenden Segmenten, um ein Regalfach freizugeben. Alternativ können einzelne Segmente abgesenkt werden, wobei eines der Segmente arretiert wird und die aufliegenden Elemente zusammen mit dem arretierten Segment ortsfest gehalten werden. Durch das Absenken der unteren Segmente und das Arretieren eines Segmentes mit den aufliegenden Segmenten wird wiederum ein Fach der Lagereinrichtung freigegeben. Jeweils erfolgt die vertikale Freigabe mittels der Abdeckung derart, dass die Gleitfläche vor der Kante des anzusteuernden Regalbodens bzw. der Lagerfläche positioniert wird.

In einer bevorzugten Ausführungsform der Lagereinrichtung ist die Abdeckung als thermisch isolierende Abdeckung ausgebildet.

Grundsätzlich sind verschiedene Zwecke der Abdeckung für bestimmte Regalflächen denkbar, insbesondere die Zugriffsbeschränkung, Lichtschutz oder sonstige Zwecke. Insbesondere dann, wenn ein Regalabschnitt gekühlt wird, um kühlungsbedürftige Medikamente zu lagern, sind die Isolationsabdeckungen üblicherweise relativ dick ausgebildet und stellen für die automatische Auslagerung entsprechend vor größere Probleme, da der Zwischenraum zwischen Bediengerät und Lagerfläche verhältnismäßig groß ist. Je nach Material der thermisch isolierenden Abdeckung kann oben auf die Segmente der Abdeckung eine verstärkte Gleitfläche ausgebildet werden oder eine Gleitfläche aus einem alternativen Material aufgebracht werden.

In einer Abwandlung der Erfindung ist die Gleitfläche an wenigstens einem der Segmente als Aufsatz mit gegenüber dem Segment vergrößerter horizontaler Tiefe auf dem Segment ausgebildet.

Grundsätzlich ist es möglich, dass die Segmente der Abdeckung unterschiedlichen Dicken aufweisen, da sie verschiedene Zwecke oder Isolationsfunktionen erfüllen sollen. Ein Sichtschutz kann dünner ausgebildet werden als eine thermische Isolation. Es sind außerdem auch reine Abstandshalter möglich, die lediglich als Trägeraufbau für aufliegende Segmente dienen und eine Gleitfläche aufweisen, wenn mittlere Lagerflächen ohne Abdeckung auszubilden sind. Derartige Abstandhalter brauchen keine Abdeckung bereitzustellen, sondern können als Rahmen ohne Füllung ausgebildet sein.

Es ist jedoch bei allen Abwandlungen gewünscht, dass die Gleitfläche jederzeit mit identischem horizontalem Abstand von der Vorderkante der Lagerfläche endet. Wird also die Abdeckung mit geringerer Dicke ausgebildet, so wird die Gleitfläche so ausgebildet, dass sie über die Abdeckungsdicke hinausragt und diesen Dickenunterschied gegenüber anderen Abdeckungen kompensieren. Außerdem können sämtliche Abdeckungen mit vorspringenden Gleitflächen ausgebildet werden, z.B. um über die Gleitfläche gleichzeitig eine Grifffunktion für einen händischen Betrieb im Notfall zur Verfügung zu stellen.

Erfindungsgemäß besteht eine Lösung der vorstehend genannten Aufgabe auch in einem Verfahren mit den Merkmalen des Patentanspruchs 7.

Bei einem Lager der eingangs genannten Art wird zur Entnahme oder zum Bestücken des Lagers durch ein Bediengerät dieses Bediengerät angesteuert, um eine ausgewählte Lagerfläche anzufahren. Falls es sich um eine Lagerfläche handelt, die mit einer Abdeckung versehen ist, wird die Abdeckung zum vertikalen Verfahren angesteuert, wobei eine obere Stirnseite der Abdeckung derart vor der ausgewählten Lagerfläche positioniert wird, dass der Lagerraum auf der Lagerfläche für das Bediengerät zugänglich ist. Die Abdeckung wird dabei vertikal so verfahren, dass die obere Stirnseite mit ihrer Gleitfläche mit der Lagerfläche entweder horizontal fluchtet oder geringfügig, z.B. 0,5-10 mm unterhalb der Ebene der Lagerfläche angeordnet ist, falls eine Entnahme eines Stückgutes von der Lagerfläche erfolgen soll. Soll hingegen eine Bestückung des Lagers vom Bediengerät aus erfolgen, wird die Abdeckung derart angesteuert, dass die obere Stirnseite mit der Lagerfläche horizontal fluchtet oder 0,5-10 mm oberhalb der Ebene der Lagerfläche angeordnet ist. Das Bediengerät wird anschließend im erstgenannten Fall zum Entnehmen eines Stückgutes von der Lagerfläche bzw. im zuletzt genannten Fall zum Bestücken der Lagerflächen in einem Stückgut angesteuert.

In einer Weiterbildung des Verfahrens wird auch das Bediengerät derart vertikal positioniert, dass der Auflagetisch des Bediengerätes vertikal mit der Gleitfläche der Abdeckung fluchtet oder 0,5-10 mm unterhalb der Gleitfläche angeordnet ist, falls eine Entnahme von der Lagerfläche erfolgen soll. Soll eine Bestückung des Lagers erfolgen wird er so angesteuert, dass er mit der Gleitfläche fluchtet oder 0,5-10 mm oberhalb der oberen Stirnseite der Gleitfläche angeordnet ist.

Die Erfindung wird nun anhand der beiliegenden Figuren näher erläutert.
Figur 1a zeigt eine perspektivische, schematische Ansicht eines erfindungsgemäßen Regallagers;
Figur 1b zeigt das Regallager aus Figur 1a in einer geöffneten Bedienstellung;
Figur 2a zeigt eine schematische, seitliche Ansicht einer Stückgutauslagerung mit einer Einrichtung gemäß der Erfindung bzw. gemäß dem erfindungsgemäßen Verfahren;
Figur 2b zeigt eine schematische Ansicht einer Stückguteinlagerung in eine erfindungsgemäße Einrichtung bzw. gemäß einem erfindungsgemäßen Verfahren;
Figur 3a zeigt eine weitere Ausführungsform der erfindungsgemäßen Einrichtung in perspektivischer Ansicht;
Figur 3b zeigt die Einrichtung aus Figur 3a in einer Seitenansicht.

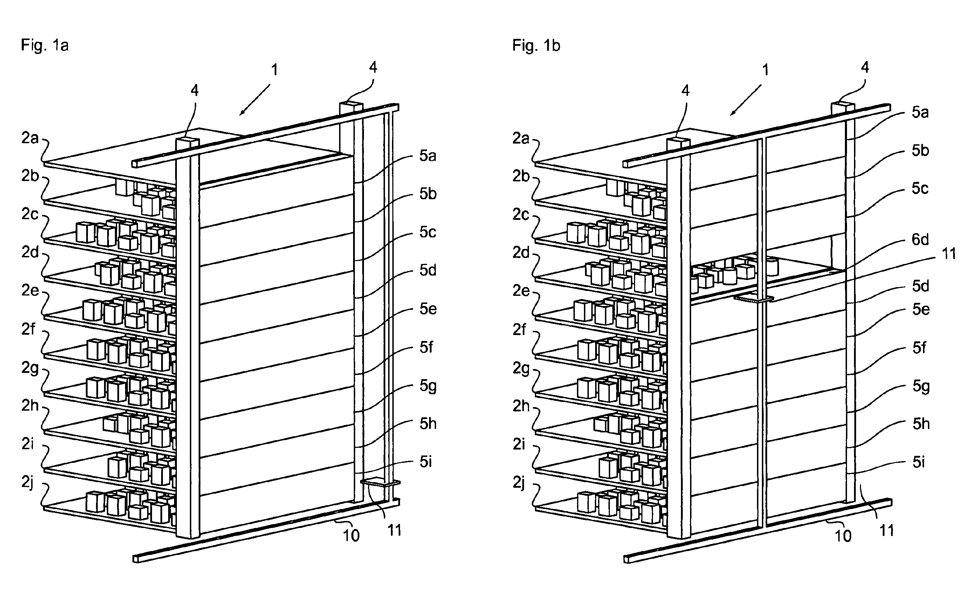

Figur 1a zeigt eine erfindungsgemäße Lagereinrichtung in einer schematischen Ansicht von schräg oben.

Es ist zu beachten, dass aus Gründen der Übersichtlichkeit die Einrichtung in teildurchbrochener Weise dargestellt ist, um den Einblick auf die Regalfächer zu ermöglichen.

Die Lagereinrichtung 1 weist eine Mehrzahl vertikal übereinander angeordneter Lagerböden 2a-2j auf, auf welchen Stückgüter 3 angeordnet sind. Ein Trägeraufbau, auf dem die Lagerböden 2a-2j ruhen oder aufgehängt sind, ist in dieser Darstellung aus Gründen der Vereinfachung nicht dargestellt. Zwei vertikal angeordnete Führungen 4 dienen der Aufnahme und Führung von einer Mehrzahl von Abdeckungssegmenten 5a-5i, die aufeinander ruhend in den Führungseinrichtungen 4 vertikal verschoben werden können.

In dem gezeigten Ausführungsbeispiel sind die Lagerböden 2a-2j äquidistant angeordnet und die Höhe jeder der Abdeckungen 5a-5i entspricht einer Lagerraumhöhe zwischen zwei benachbarten Lagerböden. Es können jedoch auch beliebige Variationen hinsichtlich der Lagerfachhöhe und der Abdeckungshöhe vorgenommen werden.

Vor dem Lager 1 ist eine Bewegungsmimik 10 mit einem Bediengerät angeordnet, wobei das Bediengerät einen Auflagetisch 11 aufweist. In der Darstellung ist der Antriebsmechanismus des Bediengerätes nicht detailliert dargestellt, dieses kann jedoch in vertikaler und in horizontaler Richtung vor dem Regallager verfahren werden. Neben dem Lagertisch 11 kann das Bediengerät zahlreiche weitere Einrichtungen, z. B. Sauggreifer, Klemmgreifer bzw. Backengreifer etc. aufweisen. Derartige Anordnungen sind aus zahlreichen Systemen der Anmelderin bekannt und können auch in den Patentanmeldungen der Anmelderin nachvollzogen werden, auf welche hier verwiesen wird.

Die Frontseiten der Abdeckungselemente 5a-5i fluchten mit den Führungen 4 oder stehen leicht vor diesen vor. Zwischen den Lagerflächen 2a-2j und den Abdeckungen 5 befindet sich nur ein schmaler Spalt, welcher den Toleranzen der Abmessungen und den Bewegungen bei einer Verschiebung der Abdeckungen Rechnung trägt. Das Bediengerät wird mit seinem Auflagetisch 11 wird in geringem Abstand zu den Frontseiten der Abdeckungselemente 5a-5i verfahren, wobei es in horizontaler Richtung, entlang der Frontseiten der Abdeckungselemente und in vertikaler Richtung verfahren werden kann. Der Auflagetisch ist bei diesem Ausführungsbeispiel nicht in Richtung der Regalfächer verfahrbar, was eine einfachere Konstruktion und rasche Positionierung bei Einlagerungs- und Auslagerungsvorgängen erlaubt.

In Figur 1a ist die Einrichtung in einem geschlossenen Zustand gezeigt, sämtliche Abdeckungselemente 5a-5i befinden sich vor den zugehörigen Lagerräumen zwischen den Ablageflächen 2a-2j. Ein Zugriff auf die eingelagerten Stückgüter 3 ist in dieser Stellung nicht möglich. Das Bediengerät mit dem Auflagetisch 11 und die Abdeckungen 5a-5i sind über ein Steuersystem ansteuerbar, so dass einzelne Ablagesegmente 5a-5i angehoben werden können, um den Zugriff auf den dahinter befindlichen Lagerraum und die darin befindlichen Stückgüter zu ermöglichen.

Figur 1b zeigt eine geöffnete Stellung der Lagereinrichtung. Der von oben aus dritte Lagerraum (auf Lagerfläche 2d) ist freigegeben, wobei drei Segmente der Abdeckung 5a, 5b, 5c vertikal nach oben verschoben wurden. Dazu ist ausschließlich die untere der drei Abdeckungen 5c angehoben worden, auf welcher die übrigen beiden Abdeckungselemente 5a, 5b ruhen. Der Auflagetisch 11 des Bediengerätes ist von der Steuereinrichtung vor die entsprechende Lagerfläche 2d verfahren worden, um ein Stückgut aus dem Lagerraum aufzunehmen. Es ist gut erkennbar, dass eine Stirnseite mit einer Gleitfläche 6d des Abdeckungselementes 5d freigelegt wurde, welche den Raum zwischen der Lagerfläche 2d und dem Auflagetisch 11 überbrückt.

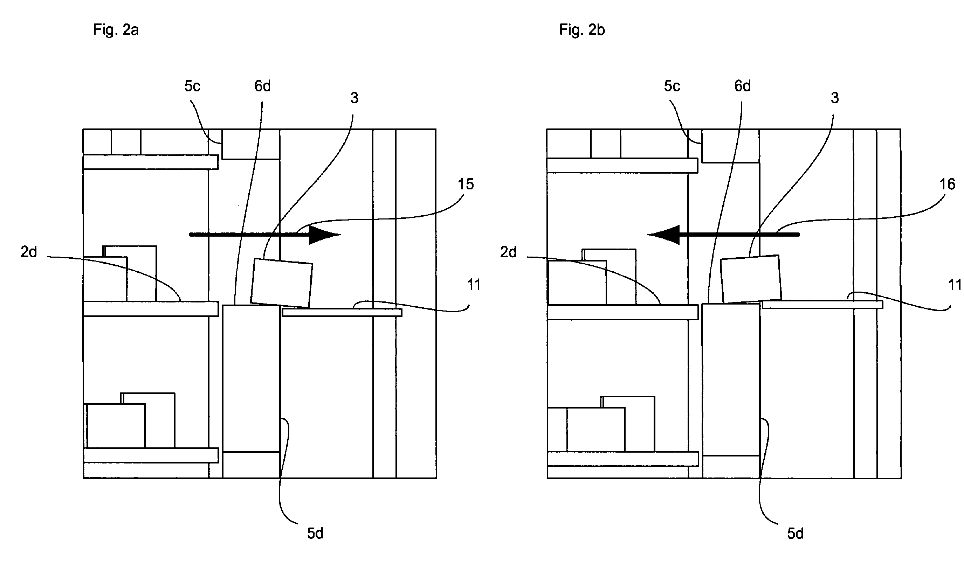

Die genaue Beziehung der Positionen der einzelnen Elemente zueinander ist in den Figuren 2a und 2b gezeigt. Diese Figuren zeigen eine Detailvergrößerung des Bereichs um das Bediengerät in einer Ansicht von der Seite.

Figur 2a zeigt die vertikale Ausrichtung und Ansteuerung der Komponenten für einen Auslagerungsvorgang. Ein Stückgut 3 von dem links befindlichen Lagerboden 2d wird in Richtung des Pfeils 15 vom Lagerboden 2d auf den Auflagetisch 11 überführt. Diese Überführung kann mit einem (nicht dargestellten) Klemmbackengreifer oder Sauggreifer erfolgen, welcher am Bediengerät, z. B. über dem Auflagetisch 11 angeordnet ist. Die Lagerfläche 2d ist mit ihrer oberen Auflageebene leicht oberhalb der Gleitfläche 6d des Abdeckungssegmentes 5d angeordnet. Dazu sind die Abdeckungssegmente vertikal derart ausgerichtet, dass die oberen Abdeckungsstirnseite 6d leicht unterhalb dieser Lagerebene 2d endet. Der horizontale Abstand, in dem sich die Abdeckungselemente 5a-5i vor den Lagerböden 2 vertikal bewegen ist derart klein bemessen, dass ein Verkeilen der Stückgüter 3 beim Herausziehen vom Lagerboden 2d auf den Auflagetisch 11 ausgeschlossen ist. Der Auflagetisch 11 des Bediengerätes ist vertikal so angesteuert, dass sich seine Auflageebene geringfügig, z. B. 0,5 - 5 mm unterhalb der Gleitfläche 6d befindet. Das Stückgut kann auf diese Weise auf der mit geringer Steighöhe gebildeten Treppe von dem Auflagetisch 2d auf den Auflagetisch 11 hinab gleiten, wobei es lediglich gezogen werden muss. Wesentlich ist, dass keine horizontale Bewegung des Auflagetisches 11 in Richtung des Fachbodens 2d ausgeführt werden braucht, da die Tiefe der Abdeckung 5d mit der stirnseitigen Gleitkante 6d den freien Abstand zwischen Tisch 11 und Ablagefläche 2d überbrückt.

Figur 2b zeigt die identische Einrichtung, wie sie von der Steuereinrichtung für einen Einlagerungsvorgang angesteuert wird.

In diesem Fall wurde die Abdeckung 5d derart verfahren, dass die Oberkante mit der Gleitfläche 6d geringfügig oberhalb der Ablageebene 2d angeordnet ist, z.B. um 0,5 mm-5 mm versetzt. Der Auflagetisch 11 ist wiederum geringfügig oberhalb der Gleitfläche 6d vertikal angeordnet. Auf diese Weise wird eine in Richtung der Regalfläche 2d absteigende Treppe mit geringer Steighöhe gebildet, auf der ein Stückgut 3 ohne Verkanten vom Bediengerät auf die Lagerfläche 2d verschoben werden kann. Wiederum überbrückt die Dicke der Abdeckung 5d den freien Raum zwischen Auflagetisch 11 und Lagerboden 2d, so dass keine Bewegung des Auflagetisches 11 auf das Regallager zu erforderlich ist. Das Stückgut 3 wird in Richtung des Pfeiles 16 vom Auflagetisch 11 in Richtung Regallager 2d verschoben.

Die Steuereinrichtung, welche sowohl die Bewegungen des Bediengerätes als auch die Bewegungen der Abdeckungen steuert, kann die Ausrichtung der einzelnen Komponenten für einen Einlagerungsvorgang oder Auslagerungsvorgang zeitgleich vornehmen. Während das Bediengerät noch an den gewünschten Regalboden herangefahren wird, wird bereits die Abdeckung 5c angehoben und die Abdeckung 5d mit der Gleitfläche 6d in die vertikal für den geplanten Vorgang passende Position gebracht, so dass ein äußerst rascher Einlagerungs- oder Auslagerungsvorgang erfolgen kann.

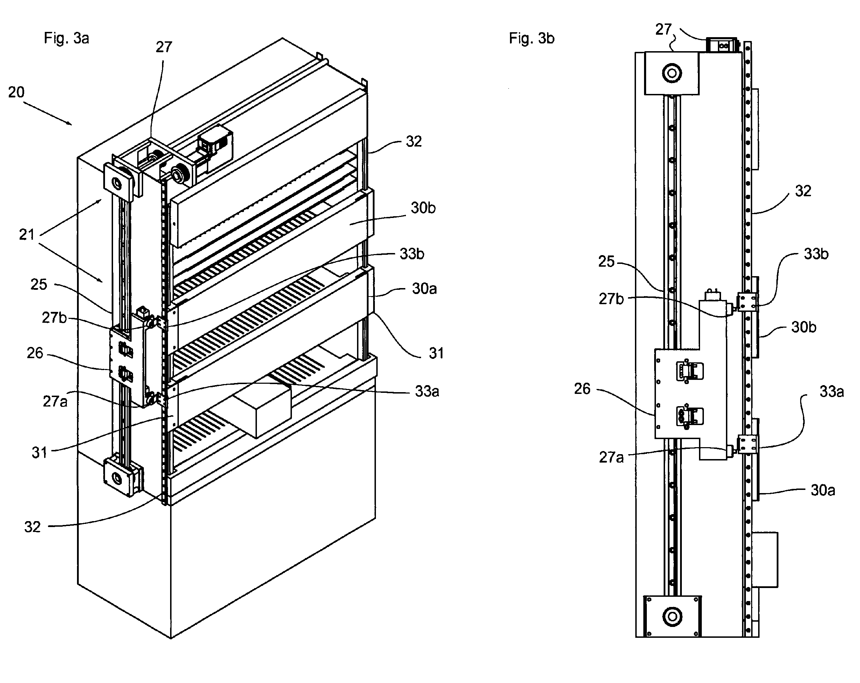

Für die vertikale Ansteuerung und Bewegung der Abdeckungselemente sind zahlreiche verschiedene Möglichkeiten denkbar. Beispielsweise kann jedes Segment der Lagereinrichtung mit einem eigenen Antrieb versehen sein. Eine konkrete Gestaltung gemäß einem weiteren Ausführungsbeispiel ist den Figuren 3a und 3b zu entnehmen.

Figur 3a zeigt eine perspektivische Ansicht einer Lagereinrichtung gemäß einem weiteren Ausführungsbeispiel. Seitlich ist an der Lagereinrichtung 20 eine Antriebsmimik 21 angeordnet. Auf einer Führung 25 ist ein Mitnahmeschlitten 26 vertikal verfahrbar angeordnet. Der Mitnahmeschlitten 26 ist über Antriebsmittel 27 in der Höhe präzise auszurichten. Der Mitnahmeschlitten 26 weist zwei aktivierbare Stützaktoren 27a, 27b auf, die über Ansteuerung mit Elektromagneten in eine Haltestellung und in eine Freigabestellung gebracht werden können. Vor der Lagerreinrichtung sind Abdeckelemente 30a, 30b angeordnet. Die Abdeckungselemente 30a, 30b verfügen an ihren jeweiligen Enden über Haltemittel 31, über welche sie in die Führungen 32 eingreifen und vertikal in den Führungen 32 verschiebbar sind. Außerdem weisen die Abdeckelemente seitlich Ansätze 33a, 33b auf, an welchen die aktivierbaren Mitnehmer 27a und 27b angreifen können.

Die Figur 3b zeigt die Einrichtung aus Figur 3a in einer reduzierten Seitenansicht, um die Details der Verschiebungsmechanik deutlich zu machen.

Der Mitnahmeschlitten 26 wird zum Freigeben eines bestimmten Regalfaches vertikal mit seinem (inaktiven bzw. eingefahrenen) oberen aktivierbaren Stützaktor 27b unterhalb des Ansatzes 33b des Abdeckungssegmentes positioniert, welches vor dem Lagerraum angeordnet ist, auf den zugegriffen werden soll. Der bis dahin inaktive Mitnehmer 27b wird aktiviert und untergreift den Ansatz 33b. Anschließend wird der Mitnahmeschlitten 26 vertikal nach oben verfahren, wobei auf der Abdeckung 30b befindliche aufliegende Abdeckungsmodule mit angehoben werden. Sofern eine Positionierung des unterliegenden Abdeckungselements 33a erforderlich ist (z.B. um die Gleitfläche des Segments 33a vertikal auszurichten), wird im Zuge des vertikalen Verfahrens des Mitnahmeschlittens 26 der untere Mitnehmer 27a aktiviert, wobei er den Ansatz 33a des Abdeckungssegmentes 30a untergreift. Anschließend wird der Mitnahmeschlitten so verfahren, dass sich die an der oberen Stirnseite angeordnete Gleitfläche 35 des Abdeckungselementes 30a in der gewünschten Position vor dem Lagerboden befindet, (wie in den Figuren 2a bzw. 2b dargestellt). Zeitgleich kann vor dem Regallager ein Bediengerät in Position gebracht werden, um den Ein- oder Auslagerungsvorgang durchzuführen.

Gemäß der Erfindung wie beansprucht, sind zahlreiche Abwandlungen möglich, insbesondere können verschiedenste Anordnungen von Abdeckungen verwendet werden, z. B. starre Segmente, Segmente, welche aus einzelnen Untersegmenten bestehen oder auch Kombinationen verschiedenartiger Abdeckungen, z. B. aus Rollladen zusammen mit starren Abdeckungselementen. Außerdem kann die vertikale Verstellung der Abdeckungen in zahlreichen abgewandelten Möglichkeiten erreicht werden.

Alternativ sind auch zwei Rollläden möglich, welche mit Antrieben gekoppelt sind, um zwischen den Rollläden einen Spalt zur Freigabe eines Regalfaches zu bilden. Die Gestaltung mit zahlreichen trennbaren Segmenten ist lediglich vorteilhaft, da nur diejenigen Regalböden freigegeben werden, auf die auch tatsächlich ein Zugriff erfolgen soll, was insbesondere bei Kühleinrichtungen hinsichtlich des Energieverbrauchs vorteilhaft ist.

## Patentansprüche

1. Lagereinrichtung für Stückgüter, aufweisend:
wenigstens ein Regal (1) mit mehreren übereinander angeordneten Regalfächern mit horizontalen Lagerflächen (2),
ein Bediengerät, welches stirnseitig vor dem Regal (1) in vertikaler und horizontaler Richtung verfahrbar ist und einen Auflagetisch (11) zur Aufnahme wenigstens eines Stückguts (3) aufweist, der derart vor einer der Lagerflächen (2) positionierbar ist, dass Stückgüter (3) von dem Auflagetisch (11) des Bediengeräts horizontal auf die Lagerfläche (2) oder von der Lagerfläche (2) auf den Auflagetisch (11) geschoben oder gezogen werden können, und
eine unmittelbar vor den Stirnseiten der Lagerflächen (2) vertikal verfahrbare Abdeckung (5), die die Stirnseiten wenigstens eines Teils der Regalfächer verschließen kann,
wobei die vertikal verfahrbare Abdeckung (5) oder wenigstens ein Segment (5a-5i) der Abdeckung (5) einen oberen Rand mit einer Gleitfläche (6d) aufweist, welche derart vor einer für den Zugriff durch das Bediengerät ausgewählten Lagerfläche (2) positionierbar ist, dass die Gleitfläche (6d) eine Überbrückung eines Freiraums zwischen der Stirnseite der ausgewählten Lagerfläche (2) und dem Auflagetisch (11) des Bediengeräts bildet, **dadurch gekennzeichnet,**
**dass** die Abdeckung (5) aus mehreren vertikal übereinander angeordneten und aufeinander ruhende Segmenten (5a-5i) gebildet ist, wobei wenigstens zwei der Segmente vertikal gegeneinander verfahrbar sind und wenigstens einige der Segmente am oberen Rand jeweils eine Gleitfläche (6d) aufweisen.

2. Lagereinrichtung nach Anspruch 1, **dadurch gekennzeichnet, dass** die Gleitfläche (6d) derart vor einer für den Zugriff durch das Bediengerät ausgewählten Lagerfläche (2) positionierbar ist,
dass die Gleitfläche (6d) mit der Lagerfläche (2) horizontal fluchtet oder 0,5-5 mm unterhalb der Ebene der Lagerfläche (2) angeordnet ist, um eine Entnahme eines Stückgutes (3) von der Lagerfläche (2) zu ermöglichen, und
dass die Gleitfläche (6d) mit der Lagerfläche (2) horizontal fluchtet oder 0,5-5 mm oberhalb der Ebene der Lagerfläche (2) angeordnet ist, um eine Bestückung der Lagerfläche (2) mit einem Stückgut (3) zu ermöglichen.

3. Lagereinrichtung nach Anspruch 1, **dadurch gekennzeichnet, dass** die Segmente (5a-5i) in seitlichen Führungen (4) als Stapel angeordnet sind, wobei die Segmente (5a-5i) jeweils aufeinander ruhen, so dass durch vertikales Anheben oder Absenken eines der Segmente die aufliegenden Segmente mitbewegt werden.

4. Lagereinrichtung nach einem der vorangehenden Ansprüche, wobei die Abdeckung (5) als thermisch isolierende Abdeckung ausgebildet ist.

5. Lagereinrichtung nach einem der vorangehenden Ansprüche, wobei eine Gleitfläche (6d) an wenigstens einem der Segmente (5a-5i) als Aufsatz mit gegenüber dem Segment vergrößerter horizontaler Tiefe auf dem Segment ausgebildet ist.

6. Lagereinrichtung nach einem der vorangehenden Ansprüche, wobei die Gleitfläche (6d) mit einem Antrieb gekoppelt ist, um die Gleitfläche (6d) um eine Schwenkachse parallel zu einer Vorderkante der Regalfächer zu schwenken, so dass die Gleitfläche (6d) den Freiraum zwischen der Stirnseite der ausgewählten Lagerfläche (2) und dem Auflagetisch (11) des Bediengeräts mit veränderbarer Steigung überbrückt.

7. Lagereinrichtung nach Anspruch 1, wobei die Abdeckung (5) wenigstens teilweise als flächige, sich über mehrere Lagerebenen erstreckende Abdeckung (5) nach Art einer Rolllade oder eines Rollos ausgebildet ist.

8. Verfahren zum Ein- und Auslagern von Stückgütern aus der Lagereinrichtung nach Anspruch 1, wobei die Lagereinrichtung aufweist:
eine Mehrzahl vertikal versetzt angeordneter Lagerflächen (2),
ein Bediengerät, welches stirnseitig vor den Lagerflächen (2) in vertikaler Richtung und horizontaler Richtung verfahrbar ist, um Stückgüter (3) von einer Transportfläche des Bediengeräts auf einer der Lagerflächen (2) abzulegen oder Stückgüter (3) von einer der Lagerflächen (2) auf die Transportfläche am Bediengerät aufzunehmen,
eine vertikal verfahrbare erste Abdeckung (5), welche zwischen Bediengerät und Lagerflächen (2) zur Abdeckung von Lagerräumen zwischen den Lagerflächen (2) angeordnet ist,
wobei das Verfahren die Schritte aufweist:
Ansteuern des Bediengeräts zum Anfahren einer ausgewählten Lagerfläche (2),
Ansteuern der ersten Abdeckung (5) zum vertikalen Verfahren einer oberen Stirnseite der Abdeckung (5) vor die ausgewählte Lagerfläche (2), so dass der Lagerraum auf der Lagerfläche (2) für das Bediengerät zugänglich ist, und
Ansteuern des Bediengerätes zum Entnehmen eines Stückgutes (3) von der Lagerfläche (2) oder zum Bestücken der Lagerfläche (2) mit einem Stückgut (3),
Ansteuern der ersten Abdeckung (5) derart, dass die obere Stirnseite mit der Lagerfläche (2) horizontal fluchtet oder 0,5-5 mm unterhalb der Ebene der Lagerfläche (2) angeordnet ist, falls eine Entnahme eines Stückgutes (3) von der Lagerfläche (2) erfolgen soll, oder
Ansteuern der ersten Abdeckung (5) derart, dass die obere Stirnseite mit der Lagerfläche (2) horizontal fluchtet oder 0,5-5 mm oberhalb der Ebene der Lagerfläche (2) angeordnet ist, falls eine Bestückung der Lagerfläche (2) mit einem Stückgut (3) erfolgen soll.

9. Verfahren nach Anspruch 8, wobei das Ansteuern des Bediengerätes zum Entnehmen eines Stückgutes (3) von der Lagerfläche (2) oder zum Bestücken der Lagerfläche (2) mit einem Stückgut (3) derart erfolgt, dass
die Transportfläche des Bediengerätes 0,5-5 mm unterhalb der oberen Stirnseite der ersten Abdeckung (5) angeordnet ist, falls eine Entnahme eines Stückgutes (3) von der Lagerfläche (2) erfolgen soll, oder
die Transportfläche des Bediengerätes 0,5-5 mm oberhalb der oberen Stirnseite der ersten Abdeckung (5) angeordnet ist, falls eine Bestückung der Lagerfläche (2) mit einem Stückgut (3) erfolgen soll.

10. Verfahren nach einem der Ansprüche 8 oder 9, wobei eine weitere vertikal verfahrbare zweite Abdeckung (5) vorgesehen ist, welche zur Abdeckung von Lagerräumen zwischen den Lagerflächen (2) oberhalb der ersten Abdeckung (5) angeordnet ist, wobei die zweite Abdeckung (5) derart angesteuert wird, das zwischen erster und zweiter Abdeckung (5) ein vertikaler Freiraum gebildet wird, durch welchen ein Zugriff des Bediengerätes auf einen Lagerraum erfolgen kann.

## Claims

1. A storage device for piece goods including:
at least one storage rack (1) with a plurality of storage compartments arranged above one another with horizontal storage surfaces (2),
a service device which is movable in front of the storage rack (1) in the vertical and horizontal direction and includes a support table (11) for receiving at least one piece good (3), which is positionable in front of one of the storage surfaces (2) such that piece goods (3) can be pushed horizontally from the support table (11) of the service device onto the storage surface (2) or pulled horizontally from the storage surface (2) onto the support table (11), and
a cover (5), which is vertically movable vertically directly in front of the front ends of the storage surfaces (2) and which can close the front ends of at least a proportion of the storage compartments, wherein the vertically movable cover (5) or at least one segment (5a-5i) of the cover (5) has an upper end edge with a sliding surface (6d), which is positionable in front of a storage surface (2) selected for access by the service device such that the sliding surface (6d) bridges a space between the front end of the selected storage surface (2) and the support table (11) of the service device, **characterised in that**
the cover (5) is constituted by a plurality of segments (5a-5i), which are arranged vertically above one another and rest on one another, wherein at least two of the segments are vertically movable towards one another and at least some of the segments have a respective sliding surface (6d) at their upper edge.

2. A storage device as claimed in claim 1, **characterised in that** the sliding surface (6d) is positionable in front of a storage surface (2) selected for access by the service device such that the sliding surface (6d) is horizontally aligned with the storage surface (2) or is arranged 0.5-5mm below the plane of the storage surface (2) in order to enable removal of a piece good (3) from the storage surface (2), and that the sliding surface (6d) is horizontally aligned with the storage surface (2) or is arranged 0.5-5mm above the plane of the storage surface (2) in order to enable the storage surface (2) to be populated with a piece good (3).

3. A storage device as claimed in claim 1, **characterised in that** the segments (5a-5i) are arranged in the form of a stack in lateral guides (4), wherein the segments (5a-5i) each rest on one another so that when one of the segments is raised or lowered vertically the segments resting on it are moved with it.

4. A storage device as claimed in one of the preceding claims, wherein the cover (5) is constructed as a thermally insulating cover.

5. A storage device as claimed in one of the preceding claims, wherein a sliding surface (6d) on at least one of the segments (5a-5i) is constructed as a top part on the segment with an increased horizontal depth with respect to the segment.

6. A storage device as claimed in one of the preceding claims, wherein the sliding surface (6d) is coupled to an actuator in order to pivot the sliding surface (6d) about a pivotal axis parallel to a front edge of the storage compartments so that the sliding surface (6d) bridges the space between the front face of the selected storage surface (2) and the support table (11) of the service device with a variable inclination.

7. A storage device as claimed in claim 1, wherein the cover (5) is constructed at least partially in the form of a laminar cover (5) extending over a plurality of storage planes in the manner of a roller shutter or a roller blind.

8. A method of inserting piece goods into or removing them from the storage device as claimed in claim 1, wherein the storage device includes:
a plurality of vertically offset storage surfaces (2), a service device which is movable in the vertical direction and the horizontal direction in front of the front end of the storage surfaces (2) in order to deposit piece goods (3) from a transport surface of the service device onto one of the storage surfaces (2) or to receive piece goods (3) from one of the storage surfaces (2) onto the transport surface on the service device,
a vertically movable first cover (5), which is arranged between the service device and storage surfaces (2) to cover storage spaces between the storage surfaces (2), wherein the method includes the steps of:
controlling the service device to approach a selected storage surface (2), controlling the first cover (5) to vertically move an upper end surface of the cover (5) in front of the selected storage surface (2) so that the storage space on the storage surface (2) is accessible to the service device, and
controlling the service device to remove a piece good (3) from the storage surface (2) or to populate the storage surface (2) with a piece good (3).
controlling the first cover (5) such that the upper end surface is horizontally aligned with the storage surface (2) or is arranged 0.5-5mm below the plane of the storage surface (2), if a piece good (3) is to be removed from the storage surface (2), or
controlling the first cover (5) such that the upper end surface is horizontally aligned with the storage surface (2) or is arranged 0.5-5mm above the plane of the storage surface (2), if the storage surface (2) is to be populated with a piece good (3).

9. A method as claimed in claim 8, wherein the control of the service device to remove a piece good (3) from the storage surface (2) or to populate the storage surface (2) with a piece good (3) occurs such that the transport surface of the service device is arranged 0.5-5mm below the upper end surface of the first cover (5), if a piece good (3) is to be removed from the storage surface (2) or the transport surface of the service device is arranged 0.5-5mm above the upper end surface of the first cover (5), if the storage surface (2) is to be populated with a piece good (3).

10. A method as claimed in one of claims 8 or 9, wherein a further vertically movable second cover (5) is provided, which is arranged to cover storage spaces between the storage surfaces (2) above the first cover (5), wherein the second cover (5) is so controlled that a vertical space is defined between the first and second cover (5), through which access of the service device (2) to a storage space can occur.

## Revendications

1. Dispositif de stockage pour articles comprenant :
au moins un rayonnage (1) comportant plusieurs compartiments de rayonnage disposés les uns au-dessus des autres et présentant des surfaces de stockage (2) horizontales,
un appareil de manipulation qui est déplaçable en direction verticale et horizontale du côté frontal en avant du rayonnage (1) et qui comprend un plateau de support (11), destiné à recevoir au moins un article (3), qui peut être positionné en avant de l'une des surfaces de stockage (2) de manière que des articles (3) peuvent être poussés ou tirés horizontalement à partir du plateau de support (11) de l'appareil de manipulation jusque sur la surface de stockage (2) ou à partir de la surface de stockage (2) jusque sur le plateau de support (11), et
des moyens de recouvrement (5), déplaçables verticalement directement en avant des côtés frontaux des surfaces de stockage (2), qui peuvent obturer les côtés frontaux d'au moins une partie des compartiments de rayonnage,
dans lequel les moyens de recouvrement (5) déplaçables verticalement, ou au moins un segment (5a-5i) des moyens de recouvrement (5), comportent un bord supérieur présentant une surface de glissement (6d) qui peut être positionnée en avant d'une surface de stockage (2), sélectionnée pour l'accès au moyen de l'appareil de manipulation, de manière que la surface de glissement (6d) forme un pont par-dessus un espace libre situé entre le côté frontal de la surface de stockage (2) sélectionnée et le plateau de support (11) de l'appareil de manipulation, **caractérisé**
**en ce que** les moyens de recouvrement (5) sont formés de plusieurs segments (5a-5i) disposés verticalement les uns au-dessus des autres et reposant les uns sur les autres, au moins deux des segments étant déplaçables verticalement l'un vis-à-vis de l'autre et au moins certains des segments comportant chacun une surface de glissement (6d) à l'endroit du bord supérieur.

2. Dispositif de stockage suivant la revendication 1, **caractérisé en ce que** la surface de glissement (6d) peut être positionnée en avant d'une surface de stockage (2) sélectionnée pour l'accès au moyen de l'appareil de manipulation,
**en ce que** la surface de glissement (6d) est horizontalement au niveau de la surface de stockage (2) ou est disposée 0,5-5 mm au-dessous du plan de la surface de stockage (2), afin de permettre un prélèvement d'un article (3) à partir de la surface de stockage (2), et
**en ce que** la surface de glissement (6d) est horizontalement au niveau de la surface de stockage (2) ou est disposée 0,5-5 mm au-dessus du plan de la surface de stockage (2), afin de permettre un approvisionnement de la surface de stockage (2) avec un article (3).

3. Dispositif de stockage suivant la revendication 1, **caractérisé en ce que** les segments (5a-5i) sont disposés dans des guides latéraux (4) sous forme de pile, les segments (5a-5i) reposant respectivement chacun sur un autre, de sorte que, du fait d'un soulèvement ou d'un abaissement vertical de l'un des segments, les segments prenant appui au-dessus sont déplacés avec celui-ci.

4. Dispositif de stockage suivant l'une des revendications précédentes, dans lequel les moyens de recouvrement (5) sont réalisés sous forme de moyens de recouvrement thermiquement isolants.

5. Dispositif de stockage suivant l'une des revendications précédentes, dans lequel une surface de glissement (6d) sur au moins l'un des segments (5a-5i) est réalisée sur le segment sous la forme d'une partie supérieure présentant une profondeur horizontale plus grande vis-à-vis du segment.

6. Dispositif de stockage suivant l'une des revendications précédentes, dans lequel la surface de glissement (6d) est accouplée à un entraînement, afin de faire basculer la surface de glissement (6d) autour d'un axe de basculement parallèlement à une arête avant des compartiments de rayonnage, de sorte que la surface de glissement (6d) forme un pont, avec une pente pouvant être modifiée, par-dessus l'espace libre situé entre le côté frontal de la surface de stockage (2) sélectionnée et le plateau de support (11) de l'appareil de manipulation.

7. Dispositif de stockage suivant la revendication 1, dans lequel les moyens de recouvrement (5) sont réalisés au moins en partie sous forme de moyens de recouvrement (5) s'étendant sur plusieurs niveaux de stockage, à la façon d'un volet roulant ou d'un store.

8. Procédé pour le stockage et le déstockage d'articles hors du dispositif de stockage suivant la revendication 1, le dispositif de stockage comprenant :
plusieurs surfaces de stockage (2) disposées de manière décalée verticalement,
un appareil de manipulation, qui est déplaçable en direction verticale et en direction horizontale du côté frontal en avant des surfaces de stockage (2), à fin de déposer des articles (3) à partir d'une surface de transport de l'appareil de manipulation jusque sur l'une des surfaces de stockage (2) ou à fin de prélever des articles (3) à partir de l'une des surfaces de stockage (2) jusque sur la surface de transport située sur l'appareil de manipulation,
des premiers moyens de recouvrement (5) déplaçables verticalement, qui sont disposés entre l'appareil de manipulation et des surfaces de stockage (2) en vue de recouvrir des espaces de stockage situés entre les surfaces de stockage (2),
dans lequel procédé sont présentes les étapes consistant :
à commander l'appareil de manipulation en vue de le faire s'approcher d'une surface de stockage (2) sélectionnée,
à commander les premiers moyens de recouvrement (5) en vue de faire avancer verticalement un côté frontal supérieur des moyens de recouvrement (5) en avant de la surface de stockage (2) sélectionnée, de sorte que l'espace de stockage sur la surface de stockage (2) soit accessible pour l'appareil de manipulation, et
à commander l'appareil de manipulation en vue de prélever un article (3) à partir de la surface de stockage (2) ou en vue d'approvisionner la surface de stockage (2) avec un article (3),
à commander les premiers moyens de recouvrement (5) de manière telle que le côté frontal supérieur vienne horizontalement au niveau de la surface de stockage (2) ou soit disposé 0,5-5 mm au-dessous du plan de la surface de stockage (2), dans le cas où doit avoir lieu un prélèvement d'un article (3) à partir de la surface de stockage (2), ou
à commander les premiers moyens de recouvrement (5) de manière telle que le côté frontal supérieur vienne horizontalement au niveau de la surface de stockage (2) ou soit disposé 0,5-5 mm au-dessus du plan de la surface de stockage (2), dans le cas où doit avoir lieu un approvisionnement de la surface de stockage (2) avec un article (3).

9. Procédé suivant la revendication 8, selon lequel la commande de l'appareil de manipulation en vue du prélèvement d'un article (3) à partir de la surface de stockage (2) ou en vue de l'approvisionnement de la surface de stockage (2) avec un article (3) a lieu de manière que
la surface de transport de l'appareil de manipulation est disposée 0,5-5 mm au-dessous du côté frontal supérieur des premiers moyens de recouvrement (5), dans le cas où doit avoir lieu un prélèvement d'un article (3) à partir de la surface de stockage (2), ou que
la surface de transport de l'appareil de manipulation est disposée 0,5-5 mm au-dessus du côté frontal supérieur des premiers moyens de recouvrement (5), dans le cas où doit avoir lieu un approvisionnement de la surface de stockage (2) avec un article (3).

10. Procédé suivant l'une des revendications 8 ou 9, selon lequel il est prévu d'autres seconds moyens de recouvrement (5) déplaçables verticalement, qui sont disposés au-dessus des premiers moyens de recouvrement (5) en vue du recouvrement d'espaces de stockage situés entre les surfaces de stockage (2), les seconds moyens de recouvrement (5) étant commandés de manière que soit formé entre les premiers et les seconds moyens de recouvrement (5) un espace libre vertical à travers lequel puisse avoir lieu un accès de l'appareil de manipulation sur un espace de stockage.
